# EUROPEAN PATENT APPLICATION

(11) **EP 4 685 749 A1**
(43) Date of publication of application: **28.01.2026**
(21) Application number: 25191526.0
(22) Date of filing: 24.07.2025
(51) Int. Cl.: G06T 11/00

(54) **METHOD AND ELECTRONIC DEVICE FOR CREATING CONTENT**

(30) Priority: 26.07.2024 KR 20240099473
(71) Applicant: GenGenAI Inc., Seoul 06038 (KR)
(72) Inventor: CHO, Hojin, 06038 Seoul (KR); KIM, Sangil, 06038 Seoul (KR); YEO, Donghun, 06038 Seoul (KR); SUNG, Myungchul, 06038 Seoul (KR); GWEON, Sungan, 06038 Seoul (KR); LEE, Kangsoo, 06038 Seoul (KR); LEE, Seongjin, 06038 Seoul (KR); YOU, Dongmin, 06038 Seoul (KR); HEO, Hoyeong, 06038 Seoul (KR); JO, Hanseok, 06038 Seoul (KR); LEE, Hwayoon, 06038 Seoul (KR)
(74) Representative: Studio Torta S.p.A.

(57) **Abstract**

A content generation method includes acquiring at least one first content, and generating, using a machine learning model, at least one second content associated with the at least one first content. The machine learning model includes an encoder configured to generate at least one feature vector based on the at least one first content, and a decoder configured to generate the at least one second content based on the generated at least one feature vector.

## Description

### BACKGROUND

### Field

The present disclosure relates to a content generation method and an electronic device.

### Description of Related Art

Artificial intelligence (AI) technology, which develops systems that make intelligent decisions by learning large amounts of data and recognizing patterns using machine learning and deep learning techniques, is being utilized in various fields such as predictive analysis, autonomous driving, medical diagnosis, language processing, and image generation. In particular, as generative AI technology has advanced, generative AI is being used in various fields.

Meanwhile, in AI model training, using content generated through generative AI (e.g., synthetic data) may allow for the acquisition of a higher-performance model compared to when only real data is used. Accordingly, the value of content generated through generative AI is increasing, and research on generating information associated with the content (e.g., labels, annotations, segmentation maps, etc.) (hereinafter referred to as content information) at the time of content generation is being actively conducted.

Existing methods for generating content information include a method of generating information such as labels using a separate model after generating the content, and a method of predicting information such as annotations using only the modules or intermediate results used when generating the content. However, in both methods, because the content and the content information are generated independently, an error may occur between the content and the content information. Accordingly, there is a demand for the development of a technology that allows content and content information to be generated simultaneously and interactively within a single network.

### SUMMARY

The present disclosure provides a content generation method and an electronic device for solving the above-mentioned problems.

The present disclosure may be implemented in various ways, including a method, an apparatus (system), and/or a non-transitory computer-readable recording medium storing computer-readable instructions.

In some embodiments, a content generation method includes acquiring at least one first content, and generating, using a machine learning model, at least one second content associated with the at least one first content. The machine learning model may include an encoder configured to generate at least one feature vector based on the at least one first content, and a decoder configured to generate the at least one second content based on the generated at least one feature vector.

In some embodiments, the at least one first content may include at least one of a first image, an outline image associated with the first image, a segmentation map associated with the first image, a depth map associated with the first image, bounding box information of an object included in the first image, facial landmark information of a person included in the first image, pose information of the person included in the first image, or a prompt associated with the first image. The at least one second content may include at least one of the first image, an IR image associated with the first image, a second image associated with the first image and having a different domain style in at least a partial region, an outline image associated with the first image, a segmentation map associated with the first image, a depth map associated with the first image, bounding box information of the object included in the first image, facial landmark information of the person included in the first image, pose information of the person included in the first image, tabular data including physical property information of the object included in the first image, a text sequence including physical property information of the object included in the first image, or a data set representing coordinate information of the object included in the first image, and the at least one first content and the at least one second content are at least partially different data.

**In** some embodiments, the decoder may be configured to generate third data represented by a third matrix by concatenating, channel by channel, first data represented by a first matrix and second data represented by a second matrix, and output the generated third data as the at least one second content.

In some embodiments, the first matrix and the second matrix included in the third data generated by the decoder may be identical in dimension and shape.

In some embodiments, the at least one second content may include a (2-1)-th content and a (2-2)-th content different from the (2-1)-th content, and the decoder may include a first decoder configured to generate the (2-1)-th content based on the generated at least one feature vector, and a second decoder configured to generate the (2-2)-th content based on the generated at least one feature vector.

In some embodiments, the first decoder may generate the (2-1)-th content based on the at least one feature vector and an intermediate vector received from the second decoder, and the second decoder generates the (2-2)-th content based on the at least one feature vector and an intermediate vector received from the first decoder.

In some embodiments, at least one of the first decoder and the second decoder may include a first layer configured to generate first information associated with the content to be generated by the at least one decoder, and a second layer configured to mix the first information and second information received from an external source.

In some embodiments, the first decoder may include a first layer configured to generate first information associated with the (2-1)-th content to be generated by the first decoder, and a second layer configured to mix second information received from the second decoder with the first information. The second decoder may include a third layer configured to generate the second information associated with the (2-2)-th content to be generated by the second decoder, and a fourth layer configured to mix the first information received from the first decoder with the second information.

In some embodiments, the first decoder may be configured to generate third data represented by a third matrix by concatenating, channel by channel, first data represented by a first matrix and second data represented by a second matrix, and output the generated third data as the (2-1)-th content.

In some embodiments, at least one of the first decoder and the second decoder may include a first layer configured to generate first information associated with the content to be generated by the at least one decoder, and a second layer configured to mix the first information and second information received from an external source.

In some embodiments, a non-transitory computer-readable recording medium storing computer-readable instructions that, when executed by at least one processor, cause the at least one processor to acquire at least one first content, and generate, using a machine learning model, at least one second content associated with the at least one first content. The machine learning model may include an encoder configured to generate at least one feature vector based on the at least one first content, and a decoder configured to generate the at least one second content based on the generated at least one feature vector.

In some embodiments, an electronic device, may include a memory, and at least one processor coupled to the memory and configured to execute computer-readable instructions stored in the memory. The at least one processor may be configured to acquire at least one first content, and generate, using a machine learning model, at least one second content associated with the at least one first content. The machine learning model may include an encoder configured to generate at least one feature vector based on the at least one first content, and a decoder configured to generate the at least one second content based on the generated at least one feature vector.

In some embodiments, the at least one first content may include at least one of a first image, an outline image associated with the first image, a segmentation map associated with the first image, a depth map associated with the first image, bounding box information of an object included in the first image, facial landmark information of a person included in the first image, pose information of the person included in the first image, or a prompt associated with the first image. The at least one second content may include at least one of the first image, an IR image associated with the first image, a second image associated with the first image and having a different domain style in at least a partial region, an outline image associated with the first image, a segmentation map associated with the first image, a depth map associated with the first image, bounding box information of the object included in the first image, facial landmark information of the person included in the first image, pose information of the person included in the first image, tabular data including physical property information of the object included in the first image, a text sequence including physical property information of the object included in the first image, or a data set representing coordinate information of the object included in the first image. The at least one first content and the at least one second content may be at least partially different data.

In some embodiments, the decoder may be configured to generate third data represented by a third matrix by concatenating, channel by channel, first data represented by a first matrix and second data represented by a second matrix, and output the generated third data as the at least one second content.

In some embodiments, the at least one second content may include a (2-1)-th content and a (2-2)-th content different from the (2-1)-th content, and the decoder may include a first decoder configured to generate the (2-1)-th content based on the generated at least one feature vector, and a second decoder configured to generate the (2-2)-th content based on the generated at least one feature vector.

According to some embodiments of the present disclosure, an error between content and information associated with the content may be minimized by generating the content and the information associated with the content simultaneously and interactively within a single network.

The effects of the present disclosure are not limited to the effects mentioned above, and other unmentioned effects will be clearly understood by those of ordinary skill in the art to which the present disclosure pertains (hereinafter referred to as 'a person of ordinary skill in the art') from the description of the claims.

### BRIEF DESCRIPTION OF THE DRAWINGS

Embodiments of the present disclosure will be described with reference to the accompanying drawings described below, wherein like reference numerals denote like elements, but are not limited thereto.
FIG. 1 is a diagram illustrating an electronic device for generating content according to an embodiment of the present disclosure.
FIG. 2 is a schematic diagram illustrating a configuration in which an information processing system is communicably connected with a plurality of user terminals in relation to data processing according to an embodiment of the present disclosure.
FIG. 3 is a block diagram illustrating the internal configuration of a user terminal and an information processing system according to an embodiment of the present disclosure.
FIG. 4 is a diagram for explaining the configuration of a machine learning model that generates content by connecting a plurality of contents in image format channel by channel according to an embodiment of the present disclosure.
FIG. 5 is a diagram for explaining a method of generating content in image format based on content in image format and content in text format according to an embodiment of the present disclosure.
FIG. 6 is a diagram for explaining a method of generating content in image format based on content in text format according to an embodiment of the present disclosure.
FIG. 7 is a diagram for explaining a method of generating content in image format based on content in image format according to an embodiment of the present disclosure.
FIG. 8 is a diagram for explaining the configuration of a machine learning model including a plurality of decoders according to an embodiment of the present disclosure.
FIG. 9 is a diagram for explaining a method of mixing information centered on one decoder according to an embodiment of the present disclosure.
FIG. 10 is a diagram for explaining a method of mixing information associated with all decoders according to an embodiment of the present disclosure.
FIG. 11 is a diagram for explaining layers within a decoder according to an embodiment of the present disclosure.
FIG. 12 is a diagram for explaining a method in which each of a plurality of decoders generates content in image format based on content in image format and content in text format according to an embodiment of the present disclosure.
FIG. 13 is a diagram for explaining a method in which a plurality of decoders generate content in image format and content in tabular format based on content in image format and content in text format according to an embodiment of the present disclosure.
FIG. 14 is a diagram for explaining a method in which a plurality of decoders generate a plurality of contents in image format and content in tabular format based on content in image format and content in text format according to an embodiment of the present disclosure.
FIG. 15 is a diagram for explaining a method in which one of a plurality of decoders generates content by connecting a plurality of contents in image format channel by channel based on content in image format and content in text format according to an embodiment of the present disclosure.
FIG. 16 is a diagram for explaining a method in which a plurality of decoders generate content in image format and content in tabular format based on content in image format according to an embodiment of the present disclosure.
FIG. 17 is a diagram for explaining a content generation method according to an embodiment of the present disclosure.

### DETAILED DESCRIPTION

Hereinafter, specific details for implementing the present disclosure will be described in detail with reference to the accompanying drawings. However, in the following description, when it is determined that the subject matter of the present disclosure may be unnecessarily obscured, a detailed description of well-known functions or configurations will be omitted.

In the accompanying drawings, identical or corresponding components are assigned the same reference numerals. In addition, in the description of the following embodiments, a redundant description of identical or corresponding components may be omitted. However, even if a description of a component is omitted, it is not intended that such a component is not included in any embodiment.

The advantages and features of the disclosed embodiments, and the methods for achieving them, will become clear with reference to the embodiments described below in conjunction with the accompanying drawings. However, the present disclosure is not limited to the embodiments disclosed below, but may be implemented in various different forms, and these embodiments are provided only to make the present disclosure complete and to fully inform a person of ordinary skill in the art of the scope of the invention.

The terms used in this specification will be briefly described, and the disclosed embodiments will be described in detail. The terms used in this specification have been selected from general terms that are currently widely used, considering the functions in the present disclosure, but the terms may vary depending on the intention of a technician in the relevant field, precedents, the emergence of new technologies, and the like. Also, in specific cases, there are terms arbitrarily selected by the applicant, in which case the meaning will be described in detail in the corresponding description part of the invention. Therefore, the terms used in the present disclosure should be defined based on the meaning that the term has and the content throughout the present disclosure, not just the name of the term.

In this specification, a singular expression includes a plural expression unless the context clearly indicates otherwise. In addition, a plural expression includes a singular expression unless the context clearly indicates otherwise. Throughout the specification, when a part is stated to include a component, this means that it may further include other components, not excluding other components, unless there is a particularly contrary description.

In addition, the term 'module' or 'unit' used in the specification means a software or hardware component, and the 'module' or 'unit' performs certain roles. However, the 'module' or 'unit' is not limited to software or hardware. A 'module' or 'unit' may be configured to be in an addressable storage medium and may be configured to reproduce one or more processors. Therefore, as an example, a 'module' or 'unit' may include at least one of components such as software components, object-oriented software components, class components, and task components, and processes, functions, attributes, procedures, subroutines, segments of program code, drivers, firmware, microcode, circuits, data, databases, data structures, tables, arrays, or variables. The functions provided within the components and 'modules' or 'units' may be combined into a smaller number of components and 'modules' or 'units' or may be further separated into additional components and 'modules' or 'units'.

According to an embodiment of the present disclosure, a 'module' or 'unit' may be implemented as a processor and a memory. A 'processor' should be broadly interpreted to include a general-purpose processor, a central processing unit (CPU), a microprocessor, a digital signal processor (DSP), a controller, a microcontroller, a state machine, etc. In some circumstances, a 'processor' may also refer to an application-specific integrated circuit (ASIC), a programmable logic device (PLD), a field programmable gate array (FPGA), etc. A 'processor' may also refer to a combination of processing devices, such as, for example, a combination of a DSP and a microprocessor, a combination of a plurality of microprocessors, a combination of one or more microprocessors combined with a DSP core, or any other such configuration. In addition, 'memory' should be broadly interpreted to include any electronic component capable of storing electronic information. 'Memory' may refer to various types of processor-readable media such as random access memory (RAM), read-only memory (ROM), non-volatile random access memory (NVRAM), programmable read-only memory (PROM), erasable-programmable read-only memory (EPROM), electrically erasable PROM (EEPROM), flash memory, magnetic or optical data storage, registers, and the like. A memory is said to be in electronic communication with a processor if the processor can read information from and/or write information to the memory. A memory integrated into a processor is in electronic communication with the processor.

In addition, terms such as first, second, A, B, (a), (b), etc. used in the following embodiments are used only to distinguish one component from another, and the essence, turn, or order of the corresponding component is not limited by the term.

In addition, in the following embodiments, when a component is described as being 'connected', 'coupled', or 'interfaced' to another component, the component may be directly connected or joined to the other component, but it should be understood that another component may be 'connected', 'coupled', or 'interfaced' between each component.

In addition, 'comprises' and/or 'comprising' used in the following embodiments do not exclude the presence or addition of one or more other components, steps, operations, and/or elements, in addition to the mentioned components, steps, operations, and/or elements.

Hereinafter, various embodiments of the present disclosure will be described in detail with reference to the accompanying drawings.

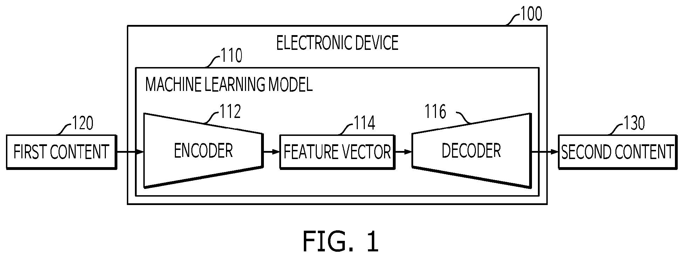

FIG. 1 is a diagram illustrating an electronic device 100 for generating content according to an embodiment of the present disclosure. Referring to FIG. 1, an electronic device 100 may acquire at least one first content 120 and generate at least one second content 130 associated with the at least one first content 120 using a machine learning model 110. Here, the machine learning model 110 may include an encoder 112 that generates at least one feature vector 114 based on the at least one first content 120, and a decoder 116 that generates the at least one second content 130 based on the generated at least one feature vector 114. For example, the machine learning model 110 may be a generative AI model.

The electronic device 100 for generating content may include a memory and at least one processor. However, the configuration of the electronic device 100 is not limited to this. According to various embodiments, the electronic device 100 may further include at least one other component in addition to the above-described components. For example, the electronic device 100 may further include a communication circuit for receiving various data from an external device.

The memory may store various data used by at least one component (e.g., a processor) of the electronic device 100. The data may, for example, include input data or output data for software (or a program) and instructions associated therewith. The memory may include volatile memory or non-volatile memory.

The processor is connected to the memory and may be configured to execute at least one computer-readable program included in the memory. For example, the processor may execute software (or a program) to control at least one other component (e.g., a hardware or software component) of the electronic device 100 connected to the processor, and may perform various data processing or operations. According to an embodiment, as at least part of the data processing or operations, the processor may load instructions or data received from another component (e.g., a communication circuit) into volatile memory, process the instructions or data stored in the volatile memory, and store the resulting data in non-volatile memory. Here, the at least one program may include instructions for acquiring at least one first content 120 and generating at least one second content 130 associated with the at least one first content 120 using the machine learning model 110.

The first content 120 input to the machine learning model 110 may include at least one of an image, an outline image associated with the image, a segmentation map associated with the image, a depth map associated with the image, bounding box information of an object included in the image, facial landmark information of a person included in the image, pose information of a person included in the image, or a prompt associated with the image. In addition, the second content 130 output through the machine learning model 110 may include at least one of an image, an IR image associated with the image, an image associated with the image and in which a domain style of at least a partial region is different, an outline image associated with the image, a segmentation map associated with the image, a depth map associated with the image, bounding box information of an object included in the image, facial landmark information of a person included in the image, pose information of a person included in the image, tabular data including physical property information of an object included in the image, a text sequence including physical property information of an object included in the image, or a data set representing coordinate information of an object included in the image. At this time, the first content 120 and the second content 130 may be at least partially different data. For example, the at least one first content 120 input to the machine learning model 110 and the at least one second content 130 output through the machine learning model 110 may be at least partially different data.

In the present disclosure, the at least one second content 130 output through the machine learning model 110 may include content and content information. That is, the decoder 116 of the machine learning model 110 may simultaneously generate content and content information based on the at least one feature vector 114. At this time, the content may include at least one of an image (e.g., a still image or a moving image), an IR image associated with the image, an image associated with the image and in which a domain style of at least a partial region is different, or a data set representing coordinate information of an object included in the image (e.g., point cloud data). In addition, the content information generated simultaneously with the content is associated with the content and may be content different from the content. For example, the content information may include at least one of an outline image associated with an image, a segmentation map associated with an image, a depth map associated with an image, bounding box information of an object included in an image, facial landmark information of a person included in an image, pose information of a person included in an image, tabular data including physical property information of an object included in an image, or a text sequence including physical property information of an object included in an image. In this way, because the content and the content information are generated simultaneously and interactively within a single network, an error between the content and the content information may be minimized.

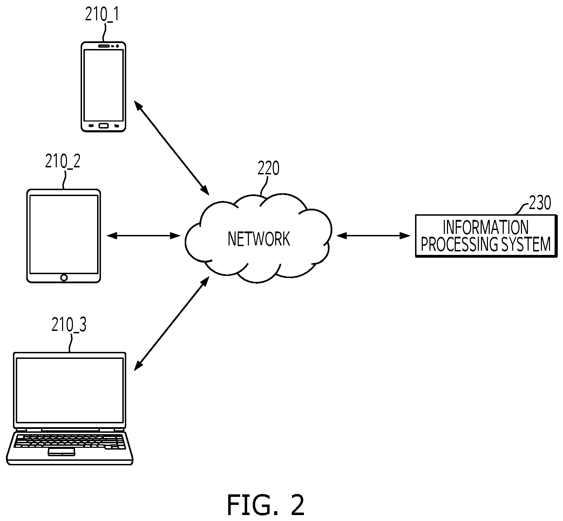

FIG. 2 is a schematic diagram illustrating a configuration in which an information processing system 230 is communicably connected with a plurality of user terminals 210_1, 210_2, and 210_3 in relation to data processing according to an embodiment of the present disclosure. The information processing system 230 may include a system(s) that can provide a data processing service (e.g., a content generation-based service). In an embodiment, the information processing system 230 may include one or more server devices and/or databases that can store, provide, and execute computer-executable programs (e.g., downloadable applications) and data related to the data processing service, or one or more distributed computing devices and/or distributed databases based on a cloud computing service. For example, the information processing system 230 may include separate systems (e.g., servers) for the data processing service.

The data processing service, etc. provided by the information processing system 230 may be provided to a user through a data processing application, a web browser application, etc. installed in each of the plurality of user terminals 210_1, 210_2,and 210_3.

The plurality of user terminals 210_1, 210_2, and 210_3 may communicate with the information processing system 230 through a network 220. The network 220 may be configured to enable communication between the plurality of user terminals 210_1, 210_2, 210_3 and the information processing system 230. The network 220 may be configured with, for example, a wired network such as Ethernet, Power Line Communication, a telephone line communication device, and RS-serial communication, a wireless network such as a mobile communication network, a wireless LAN (WLAN), Wi-Fi, Bluetooth, and ZigBee, or a combination thereof, depending on the installation environment. The communication method is not limited, and may include not only a communication method utilizing a communication network that the network 220 can include (for example, a mobile communication network, wired Internet, wireless Internet, a broadcasting network, a satellite network, etc.) but also short-range wireless communication between the user terminals 210_1, 210_2, and 210_3.

For example, the plurality of user terminals 210_1, 210_2, and 210_3 may transmit a data processing request and instructions associated with a user request for data processing to the information processing system 230 through the network 220, and the information processing system 230 may receive the same.

Although a mobile phone terminal 210_1, a tablet terminal 210_2, and a PC terminal 210_3 are shown as examples of user terminals in FIG. 2, the present disclosure is not limited thereto, and the user terminals 210_1, 210_2, and 210_3 may be any computing device capable of wired and/or wireless communication and on which a data processing application, etc. can be installed and executed. For example, the user terminal may include a smartphone, a mobile phone, a navigation device, a computer, a laptop, a digital broadcasting terminal, a personal digital assistant (PDA), a portable multimedia player (PMP), a tablet PC, a game console, a wearable device, an internet of things (IoT) device, a virtual reality (VR) device, an augmented reality (AR) device, and the like. In addition, although three user terminals 210_1, 210_2, and 210_3 are shown communicating with the information processing system 230 through the network 220 in FIG. 2, the present disclosure is not limited thereto, and a different number of user terminals may be configured to communicate with the information processing system 230 through the network 220.

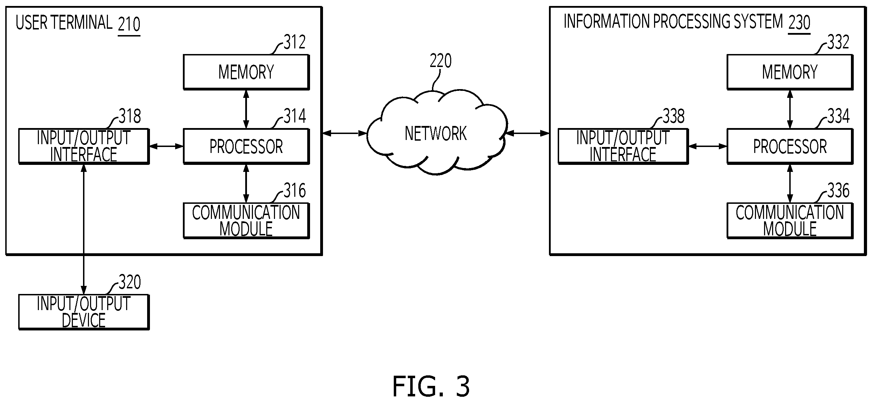

FIG. 3 is a block diagram illustrating the internal configuration of a user terminal 210 and an information processing system 230 according to an embodiment of the present disclosure. The user terminal 210 may refer to any computing device on which a data processing application, etc. can be executed and which is capable of wired/wireless communication, and may include, for example, the mobile phone terminal 210_1, the tablet terminal 210_2, the PC terminal 210_3, etc. of FIG. 2. As shown, the user terminal 210 may include a memory 312, a processor 314, a communication module 316, and an input/output interface 318. Similarly, the information processing system 230 may include a memory 332, a processor 334, a communication module 336, and an input/output interface 338. As shown in FIG. 3, the user terminal 210 and the information processing system 230 may be configured to communicate information and/or data through the network 220 using their respective communication modules 316 and 336. In addition, an input/output device 320 may be configured to input information and/or data to the user terminal 210 through the input/output interface 318 or to output information and/or data generated from the user terminal 210.

The memories 312 and 332 may include any non-transitory computer-readable recording medium. According to an embodiment, the memories 312 and 332 may include a non-volatile mass storage device such as a read only memory (ROM), a disk drive, a solid state drive (SSD), a flash memory, and the like. As another example, a non-volatile mass storage device such as a ROM, an SSD, a flash memory, a disk drive, etc. may be included in the user terminal 210 or the information processing system 230 as a separate permanent storage device distinct from the memory. In addition, an operating system and at least one program code (e.g., code for an application, etc. associated with a data processing service) may be stored in the memories 312 and 332.

These software components may be loaded from a computer-readable recording medium separate from the memories 312 and 332. Such a separate computer-readable recording medium may include a recording medium directly connectable to the user terminal 210 and the information processing system 230, and may include, for example, a computer-readable recording medium such as a floppy drive, a disk, a tape, a DVD/CD-ROM drive, a memory card, and the like. As another example, the software components may be loaded into the memories 312 and 332 through the communication modules 316 and 336 instead of a computer-readable recording medium. For example, at least one program may be loaded into the memories 312 and 332 based on a computer program (e.g., an application, etc. associated with a data processing service) installed by files provided through the network 220 by developers or a file distribution system that distributes installation files of the application.

The processors 314 and 334 may be configured to process instructions of a computer program by performing basic arithmetic, logic, and input/output operations. Instructions may be provided to the processors 314 and 334 by the memories 312 and 332 or the communication modules 316 and 336. For example, the processors 314 and 334 may be configured to execute received instructions according to program code stored in a recording device such as the memories 312 and 332.

The communication modules 316 and 336 may provide a configuration or function for the user terminal 210 and the information processing system 230 to communicate with each other through the network 220, and may provide a configuration or function for the user terminal 210 and/or the information processing system 230 to communicate with another user terminal or another system (for example, a separate cloud system, etc.). For example, a request or data (e.g., a data processing request or data, etc.) generated by the processor 314 of the user terminal 210 according to program code stored in a recording device such as the memory 312 may be transmitted to the information processing system 230 through the network 220 under the control of the communication module 316. Conversely, a control signal or command provided under the control of the processor 334 of the information processing system 230 may be received by the user terminal 210 through the communication module 316 of the user terminal 210 via the communication module 336 and the network 220.

The input/output interface 318 may be a means for interfacing with the input/output device 320. As an example, the input device may include a device such as a camera including an audio sensor and/or an image sensor, a keyboard, a microphone, a mouse, etc., and the output device may include a device such as a display, a speaker, a haptic feedback device, etc. As another example, the input/output interface 318 may be a means for interfacing with a device in which a configuration or function for performing input and output is integrated into one, such as a touchscreen. Although FIG. 3 shows that the input/output device 320 is not included in the user terminal 210, the present disclosure is not limited thereto, and it may be configured as a single device with the user terminal 210. In addition, the input/output interface 338 of the information processing system 230 may be a means for interfacing with a device (not shown) for input or output that may be connected to or included in the information processing system 230. Although FIG. 3 shows the input/output interfaces 318 and 338 as elements configured separately from the processors 314 and 334, the present disclosure is not limited thereto, and the input/output interfaces 318 and 338 may be configured to be included in the processors 314 and 334.

The user terminal 210 and the information processing system 230 may include more components than the components in FIG. 3. However, it is not necessary to clearly show most of the conventional technical components. In an embodiment, the user terminal 210 may be implemented to include at least some of the above-described input/output devices 320. In addition, the user terminal 210 may further include other components such as a transceiver, a Global Positioning System (GPS) module, a camera, various sensors, a database, and the like. For example, if the user terminal 210 is a smartphone, it may include components generally included in a smartphone, and for example, various components such as an acceleration sensor, a gyro sensor, a microphone module, a camera module, various physical buttons, buttons using a touch panel, input/output ports, a vibrator for vibration, and the like may be further included in the user terminal 210.

According to an embodiment, the processor 314 of the user terminal 210 may be configured to operate a data processing application or a web browser application that provides a data processing service. At this time, program code associated with the application may be loaded into the memory 312 of the user terminal 210. While the application is operating, the processor 314 of the user terminal 210 may receive information and/or data provided from the input/output device 320 through the input/output interface 318 or receive information and/or data from the information processing system 230 through the communication module 316, and may process the received information and/or data and store the result in the memory 312. In addition, such information and/or data may be provided to the information processing system 230 through the communication module 316.

While the data processing application is operating, the processor 314 may receive voice data, text, images, videos, etc. input or selected through an input device such as a camera including a touch screen, a keyboard, an audio sensor and/or an image sensor, a microphone, etc. connected to the input/output interface 318, and may store the received voice data, text, images, and/or videos in the memory 312 or provide them to the information processing system 230 through the communication module 316 and the network 220. In an embodiment, the processor 314 may receive a user input input through an input device, and may provide data/a request corresponding to the received user input to the information processing system 230 through the network 220 and the communication module 316.

The processor 314 of the user terminal 210 may transmit information and/or data to the input/output device 320 through the input/output interface 318 to be output. For example, the processor 314 of the user terminal 210 may output the processed information and/or data through an output device 320 such as a display output capable device (e.g., a touch screen, a display, etc.), a voice output capable device (e.g., a speaker), and the like.

The processor 334 of the information processing system 230 may be configured to manage, process, and/or store information and/or data received from the plurality of user terminals 210 and/or a plurality of external systems. The information and/or data processed by the processor 334 may be provided to the user terminal 210 through the communication module 336 and the network 220.

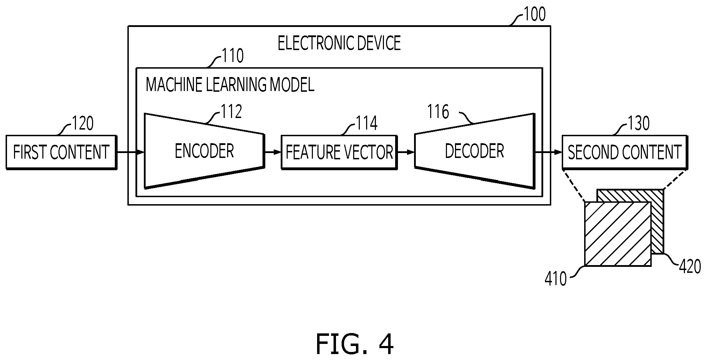

FIG. 4 is a diagram for explaining the configuration of a machine learning model 110 that generates content by connecting a plurality of contents in image format channel by channel according to an embodiment of the present disclosure. Referring to FIG. 4, a machine learning model 110 may include an encoder 112 that generates at least one feature vector 114 based on at least one first content 120, and a decoder 116 that generates at least one second content 130 based on the generated at least one feature vector 114. The decoder 116 may simultaneously generate a content 410 and a content information 420. For example, the at least one second content 130 output through the machine learning model 110 may include the content 410 and the content information 420. FIG. 4 describes a method in which, when the content 410 and the content information 420 are both content in image format, the decoder 116 generates the second content 130 including the content 410 and the content information 420. Here, the content in image format may include, for example, at least one of an image, an IR image, an outline image, a segmentation map, or a depth map.

The content 410 in image format may have its data represented by a matrix. In addition, the content information 420 in image format may also have its data represented by a matrix. Accordingly, the decoder 116 may generate third data represented by a third matrix by merging first data represented by a first matrix corresponding to the content 410 and second data represented by a second matrix corresponding to the content information 420. According to an embodiment, the decoder 116 may generate third data represented by a third matrix by concatenating the first data represented by the first matrix and the second data represented by the second matrix channel-wise, and may output the generated third data as the at least one second content 130. For example, when the first data is represented by an n-channel matrix and the second data is represented by an m-channel matrix, the decoder 116 may generate third data represented by an (n + m)-channel matrix.

According to an embodiment, if the content 410 and the content information 420 have different sizes (e.g., height and width), the decoder 116 may adjust the size of at least one of the content 410 or the content information 420. For example, the decoder 116 may resize or apply zero padding to at least one of the first data or the second data. Accordingly, the first matrix and the second matrix included in the third data generated by the decoder 116 may become identical in dimension and shape.

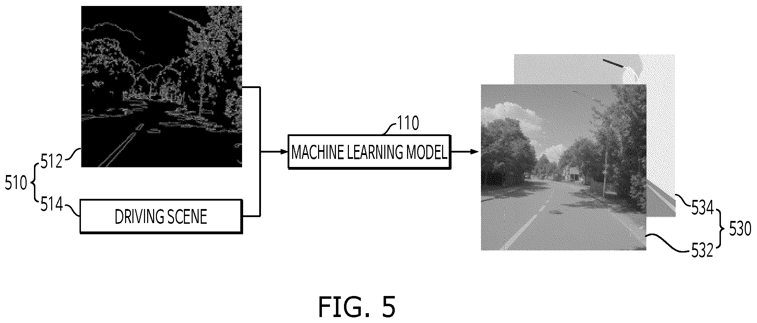

FIG. 5 is a diagram for explaining a method of generating content in image format based on content in image format and content in text format according to an embodiment of the present disclosure. Referring to FIG. 5, a machine learning model 110 may be trained to simultaneously generate a content 532 and a content information 534. FIG. 5 describes a method in which, when a content 512 in image format and a content 514 in text format are used as an input content 510 (e.g., the first content 120 of FIGS. 1 and 4) of the machine learning model 110, the machine learning model 110 generates a content 530 in image format (e.g., the second content 130 of FIGS. 1 and 4).

During a training process, when the content 512 in image format and the content 514 in text format are input, the machine learning model 110 may extract at least one first feature vector from the content 512 in image format, and extract at least one second feature vector from the content 514 in text format. Then, the machine learning model 110 may be trained to output the content 530 in image format based on the at least one first feature vector and the at least one second feature vector. For example, the machine learning model 110 may generate the content 532 and the content information 534 based on the at least one first feature vector and the at least one second feature vector. Then, the machine learning model 110 may be trained to generate third data represented by a third matrix by connecting first data represented by a first matrix corresponding to the content 532 and second data represented by a second matrix corresponding to the content information 534 channel by channel, and to output the generated third data as the content 530 in image format.

During an inference process, the machine learning model 110 may output the content 530 in image format based on the content 512 in image format and the content 514 in text format. For example, the machine learning model 110 may extract at least one first feature vector from the content 512 in image format, and extract at least one second feature vector from the content 514 in text format. Then, the machine learning model 110 may generate the content 532 and the content information 534 based on the at least one first feature vector and the at least one second feature vector. Then, the machine learning model 110 may generate third data represented by a third matrix by connecting first data represented by a first matrix corresponding to the content 532 and second data represented by a second matrix corresponding to the content information 534 channel by channel, and may output the generated third data as the content 530 in image format.

FIG. 5 illustrates a state where, when the content 512 in image format used as the input content 510 is an outline image (e.g., a canny edge image) representing a driving scene, and the content 514 in text format is a prompt describing the driving scene, a 6-channel image is output in which a 3-channel RGB image representing the driving scene as the content 532 and a 3-channel segmentation map associated with the RGB image representing the driving scene as the content information 534 are connected channel by channel.

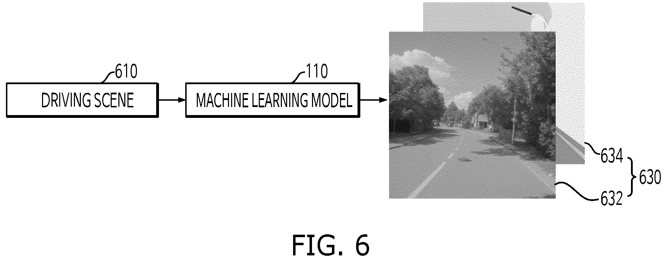

FIG. 6 is a diagram for explaining a method of generating content in image format based on content in text format according to an embodiment of the present disclosure. Referring to FIG. 6, a machine learning model 110 may be trained to simultaneously generate a content 632 and a content information 634. FIG. 6 describes a method in which, when a content 610 in text format is used as an input content (e.g., the first content 120 of FIGS. 1 and 4) of the machine learning model 110, the machine learning model 110 generates a content 630 in image format (e.g., the second content 130 of FIGS. 1 and 4).

During a training process, when the content 610 in text format is input, the machine learning model 110 may extract at least one feature vector from the content 610 in text format. Then, the machine learning model 110 may be trained to output the content 630 in image format based on the at least one feature vector. For example, the machine learning model 110 may generate the content 632 and the content information 634 based on the at least one feature vector. Then, the machine learning model 110 may be trained to generate third data represented by a third matrix by connecting first data represented by a first matrix corresponding to the content 632 and second data represented by a second matrix corresponding to the content information 634 channel by channel, and to output the generated third data as the content 630 in image format.

During an inference process, the machine learning model 110 may output the content 630 in image format based on the content 610 in text format. For example, the machine learning model 110 may extract at least one feature vector from the content 610 in text format. Then, the machine learning model 110 may generate the content 632 and the content information 634 based on the at least one feature vector. Then, the machine learning model 110 may generate third data represented by a third matrix by connecting first data represented by a first matrix corresponding to the content 632 and second data represented by a second matrix corresponding to the content information 634 channel by channel, and may output the generated third data as the content 630 in image format.

FIG. 6 illustrates a state where, when the content 610 in text format used as the input content is a prompt describing a driving scene, a 6-channel image is output in which a 3-channel RGB image representing the driving scene as the content 632 and a 3-channel segmentation map associated with the RGB image representing the driving scene as the content information 634 are connected channel by channel.

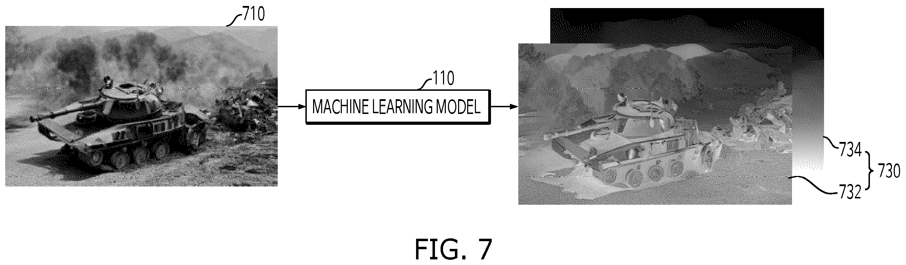

FIG. 7 is a diagram for explaining a method of generating content in image format based on content in image format according to an embodiment of the present disclosure. Referring to FIG. 7, a machine learning model 110 may be trained to simultaneously generate a content 732 and a content information 734. FIG. 7 describes a method in which, when a content 710 in image format is used as an input content (e.g., the first content 120 of FIGS. 1 and 4) of the machine learning model 110, the machine learning model 110 generates a content 730 in image format (e.g., the second content 130 of FIGS. 1 and 4).

During a training process, when the content 710 in image format is input, the machine learning model 110 may extract at least one feature vector from the content 710 in image format. Then, the machine learning model 110 may be trained to output the content 730 in image format based on the at least one feature vector. For example, the machine learning model 110 may generate the content 732 and the content information 734 based on the at least one feature vector. Then, the machine learning model 110 may be trained to generate third data represented by a third matrix by connecting first data represented by a first matrix corresponding to the content 732 and second data represented by a second matrix corresponding to the content information 734 channel by channel, and to output the generated third data as the content 730 in image format.

During an inference process, the machine learning model 110 may output the content 730 in image format based on the content 710 in image format. For example, the machine learning model 110 may extract at least one feature vector from the content 710 in image format. Then, the machine learning model 110 may generate the content 732 and the content information 734 based on the at least one feature vector. Then, the machine learning model 110 may generate third data represented by a third matrix by connecting first data represented by a first matrix corresponding to the content 732 and second data represented by a second matrix corresponding to the content information 734 channel by channel, and may output the generated third data as the content 730 in image format.

FIG. 7 illustrates a state where, when the content 710 in image format used as the input content is an RGB image representing a tank, a 2-channel image is output in which a 1-channel IR image representing the tank as the content 732 and a 1-channel depth map associated with the RGB image representing the tank as the content information 734 are connected channel by channel.

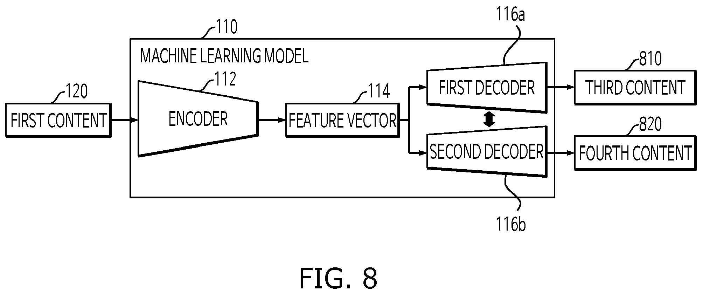

FIG. 8 is a diagram for explaining the configuration of a machine learning model 110 including a plurality of decoders 116a and 116b according to an embodiment of the present disclosure. Referring to FIG. 8, a machine learning model 110 may include an encoder 112 that generates at least one feature vector 114 based on at least one first content 120, a first decoder 116a that generates a third content 810 based on the generated at least one feature vector 114, and a second decoder 116b that generates a fourth content 820 based on the generated at least one feature vector 114. However, the number of decoders 116a and 116b is not limited to this. According to various embodiments, the machine learning model 110 may further include at least one other decoder (e.g., a third decoder) in addition to the first decoder 116a and the second decoder 116b.

Each of the plurality of decoders 116a and 116b may generate content or content information. As an example, when the first decoder 116a generates content (i.e., the third content 810), the second decoder 116b may generate content information (i.e., the fourth content 820). As another example, when the first decoder 116a generates content information (i.e., the third content 810), the second decoder 116b may generate content (i.e., the fourth content 820). As yet another example, when the first decoder 116a generates content (i.e., the third content 810), the second decoder 116b may also generate content (i.e., the fourth content 820). As yet another example, when the first decoder 116a generates content information (i.e., the third content 810), the second decoder 116b may also generate content information (i.e., the fourth content 820).

The content generated by each of the plurality of decoders 116a and 116b may include at least one of an image, an IR image associated with the image, an image associated with the image and in which a domain style of at least a partial region is different, or a data set representing coordinate information of an object included in the image (e.g., point cloud data). In addition, the content information generated by each of the plurality of decoders 116a and 116b may include at least one of an outline image associated with an image, a segmentation map associated with an image, a depth map associated with an image, bounding box information of an object included in an image, facial landmark information of a person included in an image, pose information of a person included in an image, tabular data including physical property information of an object included in an image, or a text sequence including physical property information of an object included in an image.

At least two of the plurality of decoders 116a and 116b may share and mix information with each other. For example, as shown in FIG. 8, when the plurality of decoders 116a and 116b include two decoders, i.e., a first decoder 116a and a second decoder 116b, the first decoder 116a may generate the third content 810 based on the at least one feature vector generated based on the input content and an intermediate vector received from the second decoder 116b. In addition, the second decoder 116b may generate the fourth content 820 based on the at least one feature vector generated based on the input content and an intermediate vector received from the first decoder 116a.

According to an embodiment, the plurality of decoders 116a and 116b may mix information using a cross attention algorithm. For example, the plurality of decoders 116a and 116b may generate a query vector, a key vector, and a value vector from a first vector corresponding to first information and a second vector corresponding to second information. Then, the plurality of decoders 116a and 116b may calculate an attention score representing the similarity between the query vector and the key vector. According to an embodiment, the plurality of decoders 116a and 116b may calculate the attention score using a matrix multiplication operation (or a dot product between matrices). Then, the plurality of decoders 116a and 116b may calculate an attention weight by applying a softmax function to the attention score. Here, applying the softmax function is to obtain a probability distribution in which the sum of all values is 1, and each value obtained by applying the softmax function, i.e., the attention weight, may represent the importance of each key vector corresponding to the query vector. Then, the plurality of decoders 116a and 116b may calculate a weighted sum for the value vector through a matrix multiplication operation (or dot product) of the attention weight and the value vector. At this time, the calculated weighted sum may be a new vector in which the first information and the second information are mixed.

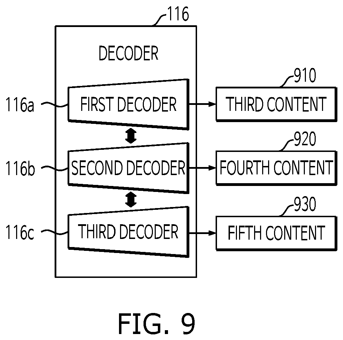

FIG. 9 is a diagram for explaining a method of mixing information centered on a decoder that generates content in image format according to an embodiment of the present disclosure. Referring to FIG. 9, a machine learning model 110 may include a plurality of decoders 116a, 116b, and 116c. At this time, at least two of the plurality of decoders 116a, 116b, and 116c may share and mix information with each other. For example, as shown in FIG. 9, when the plurality of decoders 116a, 116b, and 116c include three decoders, i.e., a first decoder 116a, a second decoder 116b, and a third decoder 116c, the first decoder 116a and the second decoder 116b may share and mix information, and the second decoder 116b and the third decoder 116c may share and mix information. That is, the plurality of decoders 116a, 116b, and 116c may share and mix information centered on the second decoder 116b. In this case, the first decoder 116a may generate a third content 910 based on the at least one feature vector generated based on the input content and an intermediate vector received from the second decoder 116b. In addition, the second decoder 116b may generate a fourth content 920 based on the at least one feature vector generated based on the input content, an intermediate vector received from the first decoder 116a, and an intermediate vector received from the third decoder 116c. In addition, the third decoder 116c may generate a fifth content 930 based on the at least one feature vector generated based on the input content and an intermediate vector received from the second decoder 116b.

Each of the plurality of decoders 116a, 116b, and 116c may generate content or content information. According to an embodiment, a decoder that is central in the process of sharing and mixing information (e.g., the second decoder 116b) may generate content (e.g., the fourth content 920), and the remaining decoders (e.g., the first decoder 116a and the third decoder 116c) may generate content information (e.g., the third content 910 and the fifth content 930). In some embodiments, the decoder that is central in the process of sharing and mixing information (e.g., the second decoder 116b) generates content (e.g., the fourth content 920), one of the remaining decoders (e.g., the first decoder 116a) also generates content (e.g., the third content 910), and the other of the remaining decoders (e.g., the third decoder 116c) may generate content information (e.g., the fifth content 930).

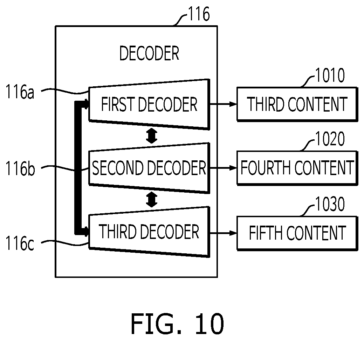

FIG. 10 is a diagram for explaining a method of mixing information associated with all decoders according to an embodiment of the present disclosure. Referring to FIG. 10, a machine learning model 110 may include a plurality of decoders 116a, 116b, and 116c. In addition, each of the plurality of decoders 116a, 116b, and 116c may generate content or content information. At this time, the plurality of decoders 116a, 116b, and 116c may share and mix information with each other. For example, as shown in FIG. 10, when the plurality of decoders 116a, 116b, and 116c include three decoders, i.e., a first decoder 116a, a second decoder 116b, and a third decoder 116c, the first decoder 116a and the second decoder 116b may share and mix information, the second decoder 116b and the third decoder 116c may share and mix information, and the first decoder 116a and the third decoder 116c may share and mix information. That is, all of the plurality of decoders 116a, 116b, and 116c may share and mix information with each other. In this case, the first decoder 116a may generate a third content 1010 based on the at least one feature vector generated based on the input content, an intermediate vector received from the second decoder 116b, and an intermediate vector received from the third decoder 116c. In addition, the second decoder 116b may generate a fourth content 1020 based on the at least one feature vector generated based on the input content, an intermediate vector received from the first decoder 116a, and an intermediate vector received from the third decoder 116c. In addition, the third decoder 116c may generate a fifth content 1030 based on the at least one feature vector generated based on the input content, an intermediate vector received from the first decoder 116a, and an intermediate vector received from the second decoder 116b.

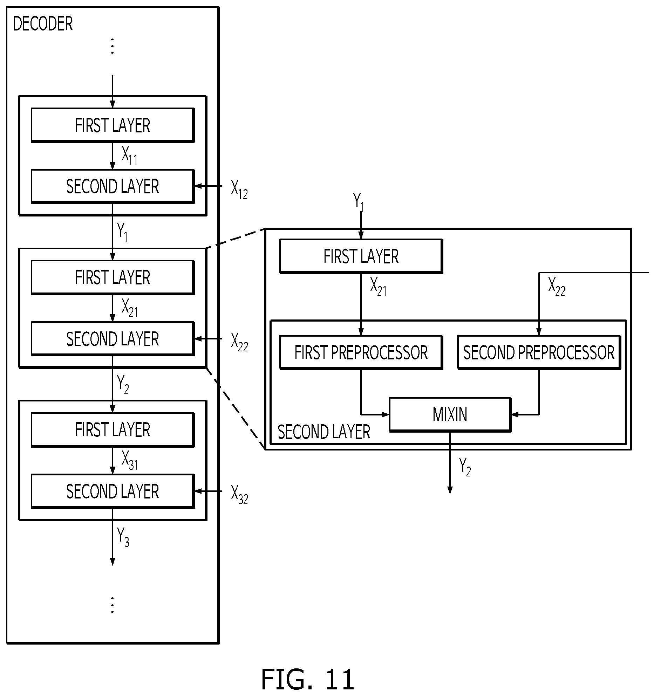

FIG. 11 is a diagram for explaining layers within a decoder according to an embodiment of the present disclosure. Referring to FIG. 11, a machine learning model 110 may include a plurality of decoders (e.g., a first decoder 116a, a second decoder 116b, or a third decoder 116c). At this time, at least one decoder of the plurality of decoders may include a first layer that generates first information X11, X21, X31 associated with the content to be generated by the corresponding decoder, and a second layer that mixes the first information with second information X12, X22, X32 received from an external source. For example, the first decoder may include a (1-1)-th layer that generates (1-1)-th information X11 associated with the content to be generated by the first decoder, and a (2-1)-th layer that mixes (2-1)-th information X12 received from the second decoder with the (1-1)-th information. In addition, the second decoder may include a (1-2)-th layer that generates (1-2)-th information X21 associated with the content to be generated by the second decoder, and a (2-2)-th layer that mixes (2-2)-th information X22 received from the first decoder with the (1-2)-th information.

According to an embodiment, the second layer may include a first preprocessor that preprocesses the first information, a second preprocessor that preprocesses the second information, and a mixin module that mixes the preprocessed first information and the preprocessed second information. For example, at least one decoder of the plurality of decoders may preprocess information inside the decoder (the first information) and information outside the decoder (the second information) respectively, and then reflect the external information in the decoder through the mixin module. The mixin module may, for example, mix information using a cross attention algorithm.

According to an embodiment, the first information, the second information, and third information Y1, Y2, Y3 output through the decoder may each be represented by a vector or a matrix. At this time, the first preprocessor and the second preprocessor may match the dimension and shape of the first information and the second information to be identical.

According to an embodiment, at least one of the plurality of decoders may generate one content by connecting a plurality of contents in image format channel by channel. For example, at least one of the plurality of decoders may generate third data represented by a third matrix by connecting first data represented by a first matrix and second data represented by a second matrix channel by channel, and may output the generated third data as content (e.g., the second content 130 of FIG. 4).

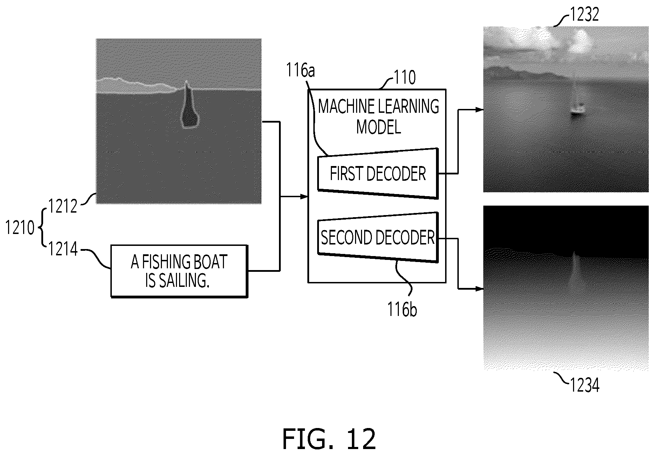

FIG. 12 is a diagram for explaining a method in which each of a plurality of decoders generates content in image format based on content in image format and content in text format according to an embodiment of the present disclosure. Referring to FIG. 12, a machine learning model 110 including a plurality of decoders 116a and 116b may be trained to simultaneously generate a content 1232 and a content information 1234. FIG. 12 describes a method in which, when a content 1212 in image format and a content 1214 in text format are used as an input content 1210 (e.g., the first content 120 of FIGS. 1 and 8) of the machine learning model 110, each of the plurality of decoders 116a and 116b included in the machine learning model 110 generates content 1232 and 1234 in image format (e.g., the second content 130 of FIG. 1 or the third content 810 and fourth content 820 of FIG. 8).

During a training process, when the content 1212 in image format and the content 1214 in text format are input, the machine learning model 110 may extract at least one first feature vector from the content 1212 in image format and extract at least one second feature vector from the content 1214 in text format. Then, a first decoder 116a of the machine learning model 110 may be trained to output the content 1232 in image format based on the at least one first feature vector and the at least one second feature vector, and a second decoder 116b of the machine learning model 110 may be trained to output the content information 1234 in image format based on the at least one first feature vector and the at least one second feature vector. At this time, the content information 1234 output by the second decoder 116b may be content associated with the content 1232 output by the first decoder 116a. In addition, the plurality of decoders 116a and 116b may share and mix information with each other (e.g., at least a part of the content 1232 and at least a part of the content information 1234). For example, the plurality of decoders 116a and 116b may mix information using a cross attention algorithm.

During an inference process, the machine learning model 110 may cause each of the plurality of decoders 116a and 116b to output the content 1232, 1234 in image format based on the content 1212 in image format and the content 1214 in text format. For example, the machine learning model 110 may extract at least one first feature vector from the content 1212 in image format and extract at least one second feature vector from the content 1214 in text format. Then, the first decoder 116a of the machine learning model 110 may generate the content 1232 based on the at least one first feature vector and the at least one second feature vector, and the second decoder 116b of the machine learning model 110 may generate the content information 1234 based on the at least one first feature vector and the at least one second feature vector. At this time, at least a part of the content 1232 and at least a part of the content information 1234 may be mixed.

FIG. 12 illustrates a state where, when the content 1212 in image format used as the input content 1210 is a segmentation map representing a sailing scene, and the content 1214 in text format is a prompt describing the sailing scene, the first decoder 116a outputs an RGB image representing the sailing scene as the content 1232, and the second decoder 116b outputs a depth map associated with the RGB image representing the sailing scene as the content information 1234.

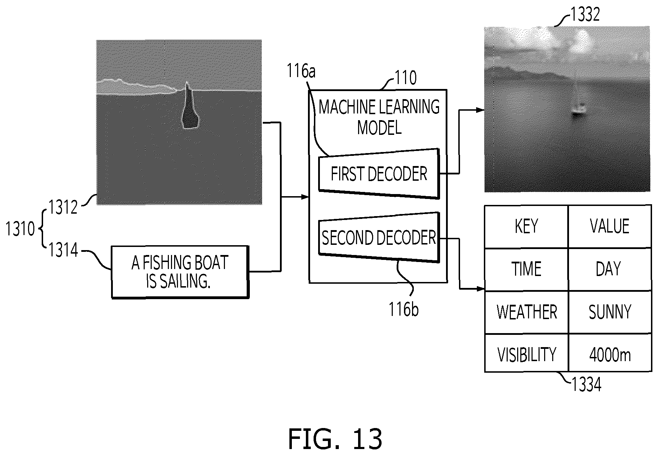

FIG. 13 is a diagram for explaining a method in which a plurality of decoders generate content in image format and content in tabular format based on content in image format and content in text format according to an embodiment of the present disclosure. Referring to FIG. 13, a machine learning model 110 including a plurality of decoders 116a and 116b may be trained to simultaneously generate a content 1332 and a content information 1334. FIG. 13 describes a method in which, when a content 1312 in image format and a content 1314 in text format are used as an input content 1310 (e.g., the first content 120 of FIGS. 1 and 8) of the machine learning model 110, the plurality of decoders 116a and 116b included in the machine learning model 110 generate content 1332 in image format (e.g., the second content 130 of FIG. 1 or the third content 810 of FIG. 8) and content 1334 in tabular format (e.g., the second content 130 of FIG. 1 or the fourth content 820 of FIG. 8).

During a training process, when the content 1312 in image format and the content 1314 in text format are input, the machine learning model 110 may extract at least one first feature vector from the content 1312 in image format and extract at least one second feature vector from the content 1314 in text format. Then, a first decoder 116a of the machine learning model 110 may be trained to output the content 1332 in image format based on the at least one first feature vector and the at least one second feature vector, and a second decoder 116b of the machine learning model 110 may be trained to output the content information 1334 in tabular format based on the at least one first feature vector and the at least one second feature vector. At this time, the content information 1334 output by the second decoder 116b may be content associated with the content 1332 output by the first decoder 116a. In addition, the plurality of decoders 116a and 116b may share and mix information with each other (e.g., at least a part of the content 1332 and at least a part of the content information 1334). For example, the plurality of decoders 116a and 116b may mix information using a cross attention algorithm.

During an inference process, the machine learning model 110 may cause the plurality of decoders 116a and 116b to output the content 1332 in image format and the content information 1334 in tabular format based on the content 1312 in image format and the content 1314 in text format. For example, the machine learning model 110 may extract at least one first feature vector from the content 1312 in image format and extract at least one second feature vector from the content 1314 in text format. Then, the first decoder 116a of the machine learning model 110 may generate the content 1332 based on the at least one first feature vector and the at least one second feature vector, and the second decoder 116b of the machine learning model 110 may generate the content information 1334 based on the at least one first feature vector and the at least one second feature vector. At this time, at least a part of the content 1332 and at least a part of the content information 1334 may be mixed.

FIG. 13 illustrates a state where, when the content 1312 in image format used as the input content 1310 is a segmentation map representing a sailing scene, and the content 1314 in text format is a prompt describing the sailing scene, the first decoder 116a outputs an RGB image representing the sailing scene as the content 1332, and the second decoder 116b outputs tabular data including physical property information of an object included in the RGB image representing the sailing scene as the content information 1334. The tabular data may, for example, include information such as sailing time, weather, visibility, and the like.

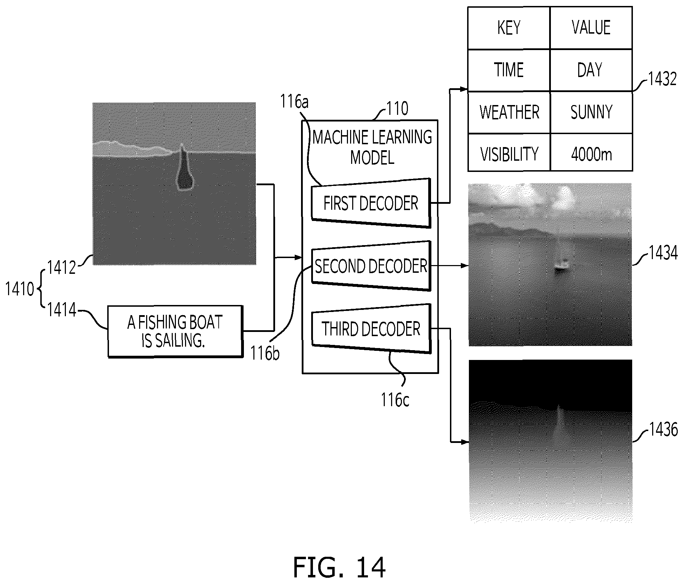

FIG. 14 is a diagram for explaining a method in which a plurality of decoders generate a plurality of contents in image format and content in tabular format based on content in image format and content in text format according to an embodiment of the present disclosure. Referring to FIG. 14, a machine learning model 110 including a plurality of decoders 116a, 116b, and 116c may be trained to simultaneously generate a content 1434 and content information 1432, 1436. FIG. 14 describes a method in which, when a content 1412 in image format and a content 1414 in text format are used as an input content 1410 (e.g., the first content 120 of FIGS. 1 and 8) of the machine learning model 110, the plurality of decoders 116a, 116b, and 116c included in the machine learning model 110 generate a plurality of contents 1434, 1436 in image format (e.g., the second content 130 of FIG. 1 or the third content 810 of FIG. 8) and content 1432 in tabular format (e.g., the second content 130 of FIG. 1 or the fourth content 820 of FIG. 8).

During a training process, when the content 1412 in image format and the content 1414 in text format are input, the machine learning model 110 may extract at least one first feature vector from the content 1412 in image format and extract at least one second feature vector from the content 1414 in text format. Then, a first decoder 116a of the machine learning model 110 may be trained to output first content information 1432 in tabular format based on the at least one first feature vector and the at least one second feature vector, a second decoder 116b of the machine learning model 110 may be trained to output content 1434 in image format based on the at least one first feature vector and the at least one second feature vector, and a third decoder 116c of the machine learning model 110 may be trained to output second content information 1436 in image format based on the at least one first feature vector and the at least one second feature vector. In this case, the first decoder 116a and the second content information 1436 output by the third decoder 116c may be content associated with the content 1434 output by the second decoder 116b. In addition, the plurality of decoders 116a, 116b, and 116c may share and mix information with each other (e.g., at least a part of the content 1434, at least a part of the first content information 1432, and at least a part of the second content information 1436). For example, the plurality of decoders 116a, 116b, and 116c may mix information using a cross attention algorithm.

During an inference process, the machine learning model 110 may cause the plurality of decoders 116a, 116b, and 116c to output the content 1434 in image format, the first content information 1432 in tabular format, and the second content information 1436 in image format based on the content 1412 in image format and the content 1414 in text format. For example, the machine learning model 110 may extract at least one first feature vector from the content 1412 in image format and extract at least one second feature vector from the content 1414 in text format. Then, the first decoder 116a of the machine learning model 110 may generate the first content information 1432 based on the at least one first feature vector and the at least one second feature vector, the second decoder 116b of the machine learning model 110 may generate the content 1434 based on the at least one first feature vector and the at least one second feature vector, and the third decoder 116c of the machine learning model 110 may generate the second content information 1436 based on the at least one first feature vector and the at least one second feature vector. At this time, at least a part of the content 1434, at least a part of the first content information 1432, and at least a part of the second content information 1436 may be mixed.

FIG. 14 illustrates a state where, when the content 1412 in image format used as the input content 1410 is a segmentation map representing a sailing scene, and the content 1414 in text format is a prompt describing the sailing scene, the second decoder 116b outputs an RGB image representing the sailing scene as the content 1434, the first decoder 116a outputs tabular data including physical property information of an object included in the RGB image representing the sailing scene as the first content information 1432, and the third decoder 116c outputs a depth map associated with the RGB image representing the sailing scene as the second content information 1436. The tabular data may, for example, include information such as sailing time, weather, visibility, and the like.

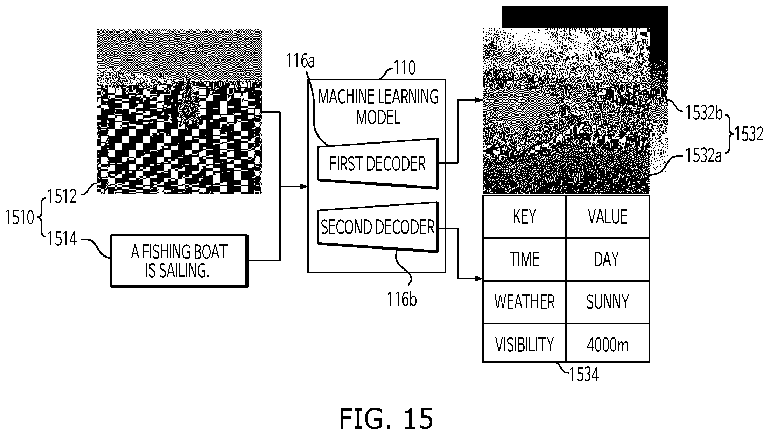

FIG. 15 is a diagram for explaining a method in which one of a plurality of decoders generates content by connecting a plurality of contents in image format channel by channel based on content in image format and content in text format according to an embodiment of the present disclosure. Referring to FIG. 15, a machine learning model 110 including a plurality of decoders 116a, 116b, and 116c may be trained to simultaneously generate a content 1532a and content information 1532b, 1534. FIG. 15 describes a method in which, when a content 1512 in image format and a content 1514 in text format are used as an input content 1510 (e.g., the first content 120 of FIGS. 1 and 8) of the machine learning model 110, the plurality of decoders 116a and 116b included in the machine learning model 110 generate content 1532 in image format (e.g., the second content 130 of FIG. 1 or the third content 810 of FIG. 8) and content 1534 in tabular format (e.g., the second content 130 of FIG. 1 or the fourth content 820 of FIG. 8).

During a training process, when the content 1512 in image format and the content 1514 in text format are input, the machine learning model 110 may extract at least one first feature vector from the content 1512 in image format and extract at least one second feature vector from the content 1514 in text format. Then, a first decoder 116a of the machine learning model 110 may generate the content 1532a in image format and first content information 1532b in image format based on the at least one first feature vector and the at least one second feature vector, and a second decoder 116b of the machine learning model 110 may generate second content information 1534 in tabular format. Then, the first decoder 116a may generate third data represented by a third matrix by connecting first data represented by a first matrix corresponding to the content 1532a and second data represented by a second matrix corresponding to the first content information 1532b channel by channel, and may be trained to output the generated third data as the content 1532 in image format, and the second decoder 116b may be trained to output the second content information 1534 in tabular format. At this time, the first content information 1532b generated by the first decoder 116a and the second content information 1534 output by the second decoder 116b may be content associated with the content 1532a output by the first decoder 116a. In addition, the plurality of decoders 116a and 116b may share and mix information with each other (e.g., at least a part of the content 1532a, at least a part of the first content information 1532b, and at least a part of the second content information 1534). For example, the plurality of decoders 116a and 116b may mix information using a cross attention algorithm.

During an inference process, the machine learning model 110 may cause the plurality of decoders 116a and 116b to output the content 1532a in image format, the first content information 1532b in image format, and the second content information 1534 in tabular format based on the content 1512 in image format and the content 1514 in text format. For example, the machine learning model 110 may extract at least one first feature vector from the content 1512 in image format and extract at least one second feature vector from the content 1514 in text format. Then, the first decoder 116a of the machine learning model 110 may generate the content 1532a in image format and the first content information 1532b in image format based on the at least one first feature vector and the at least one second feature vector, and the second decoder 116b of the machine learning model 110 may generate the second content information 1534 in tabular format. Then, the first decoder 116a may generate third data represented by a third matrix by connecting first data represented by a first matrix corresponding to the content 1532a and second data represented by a second matrix corresponding to the first content information 1532b channel by channel, and may output the generated third data as the content 1532 in image format, and the second decoder 116b may output the content information 1534 in tabular format. At this time, at least a part of the content 1532a, at least a part of the first content information 1532b, and at least a part of the second content information 1534 may be mixed.

FIG. 15 illustrates a state where, when the content 1512 in image format used as the input content 1510 is a segmentation map representing a sailing scene, and the content 1514 in text format is a prompt describing the sailing scene, the first decoder 116a outputs a 4-channel image in which a 3-channel RGB image representing the sailing scene as the content 1532a and a 1-channel depth map associated with the RGB image representing the sailing scene as the first content information 1532b are connected channel by channel, and the second decoder 116b outputs tabular data including physical property information of an object included in the RGB image representing the sailing scene as the second content information 1534. The tabular data may, for example, include information such as sailing time, weather, visibility, and the like.

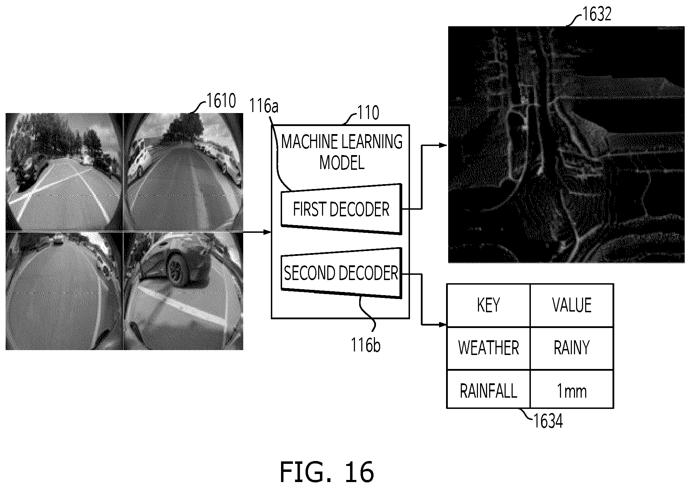

FIG. 16 is a diagram for explaining a method in which a plurality of decoders generate content in image format and content in tabular format based on content in image format according to an embodiment of the present disclosure. Referring to FIG. 16, a machine learning model 110 including a plurality of decoders 116a and 116b may be trained to simultaneously generate a content 1632 and a content information 1634. FIG. 16 describes a method in which, when a content 1610 in image format is used as an input content (e.g., the first content 120 of FIGS. 1 and 8) of the machine learning model 110, the plurality of decoders 116a and 116b included in the machine learning model 110 generate content 1632 in image format (e.g., the second content 130 of FIG. 1 or the third content 810 of FIG. 8) and content 1634 in tabular format (e.g., the second content 130 of FIG. 1 or the fourth content 820 of FIG. 8).

During a training process, when the content 1610 in image format is input, the machine learning model 110 may extract at least one feature vector from the content 1610 in image format. Then, a first decoder 116a of the machine learning model 110 may be trained to output the content 1632 in image format based on the at least one feature vector, and a second decoder 116b of the machine learning model 110 may be trained to output the content information 1634 in tabular format based on the at least one feature vector. At this time, the content information 1634 output by the second decoder 116b may be content associated with the content 1632 output by the first decoder 116a. In addition, the plurality of decoders 116a and 116b may share and mix information with each other (e.g., at least a part of the content 1632 and at least a part of the content information 1634). For example, the plurality of decoders 116a and 116b may mix information using a cross attention algorithm.

During an inference process, the machine learning model 110 may cause the plurality of decoders 116a and 116b to output the content 1632 in image format and the content information 1634 in tabular format based on the content 1610 in image format. For example, the machine learning model 110 may extract at least one feature vector from the content 1610 in image format. Then, the first decoder 116a of the machine learning model 110 may generate the content 1632 based on the at least one feature vector, and the second decoder 116b of the machine learning model 110 may generate the content information 1634 based on the at least one feature vector. At this time, at least a part of the content 1632 and at least a part of the content information 1634 may be mixed.

FIG. 16 illustrates a state where, when the content 1610 in image format used as the input content is a plurality of images captured in various directions from an autonomous driving vehicle, the first decoder 116a outputs point cloud data based on the plurality of images captured in various directions from the autonomous driving vehicle as the content 1632, and the second decoder 116b outputs tabular data including physical property information of an object included in the plurality of images captured in various directions from the autonomous driving vehicle as the content information 1634. The tabular data may, for example, include information such as weather, rainfall, and the like.

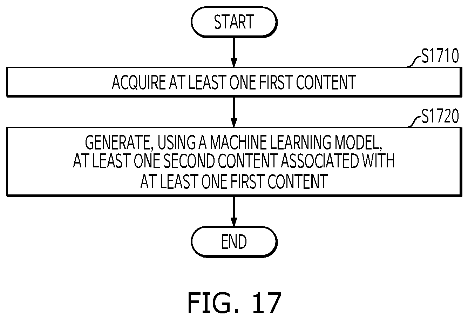

FIG. 17 is a diagram for explaining a content generation method according to an embodiment of the present disclosure. Referring to FIG. 17, a processor of an electronic device for generating content (e.g., the electronic device 100 of FIG. 1) may, in step S1710, acquire at least one first content (e.g., the first content 120 of FIG. 1, the first content 120 of FIG. 4, or the first content 120 of FIG. 8). Here, the first content may include at least one of an image, an outline image associated with the image, a segmentation map associated with the image, a depth map associated with the image, bounding box information of an object included in the image, facial landmark information of a person included in the image, pose information of a person included in the image, or a prompt associated with the image.

In step S1720, the processor may generate at least one second content (e.g., the second content 130 of FIG. 1, the second content 130 of FIG. 4, or the third content 810 and the fourth content 820 of FIG. 8) associated with the at least one first content using a machine learning model. Here, the machine learning model may include an encoder that generates at least one feature vector based on the at least one first content, and a decoder that generates the at least one second content based on the generated at least one feature vector. For example, the machine learning model may be a generative AI model. Here, the second content may include at least one of an image, an IR image associated with the image, an image associated with the image and in which a domain style of at least a partial region is different, an outline image associated with the image, a segmentation map associated with the image, a depth map associated with the image, bounding box information of an object included in the image, facial landmark information of a person included in the image, pose information of a person included in the image, tabular data including physical property information of an object included in the image, a text sequence including physical property information of an object included in the image, or a data set representing coordinate information of an object included in the image. In addition, the first content and the second content may be at least partially different data. For example, the at least one first content input to the machine learning model and the at least one second content output through the machine learning model may be at least partially different data.

The above-described flowchart and the above-described explanation are only an example, and may be implemented differently in some embodiments. For example, in some embodiments, the order of each step may be changed, some steps may be repeated, some steps may be omitted, or some steps may be added.

The above-described method may be provided as a computer program stored on a computer-readable recording medium for execution on a computer. The medium may continuously store a computer-executable program, or temporarily store it for execution or download. In addition, the medium may be various recording means or storage means in the form of a single or several hardware combined, but is not limited to a medium directly connected to a certain computer system, and may be distributed on a network. Examples of the medium may include a magnetic medium such as a hard disk, a floppy disk, and a magnetic tape, an optical recording medium such as a CD-ROM and a DVD, a magneto-optical medium such as a floptical disk, and one configured to store program instructions, including a ROM, a RAM, a flash memory, and the like. In addition, other examples of the medium may also include a recording medium or storage medium managed by an app store that distributes applications or a site, server, etc. that supplies or distributes various other software.

The methods, operations, or techniques of the present disclosure may also be implemented by various means. For example, these techniques may be implemented in hardware, firmware, software, or a combination thereof. Those of ordinary skill in the art will understand that the various exemplary logical blocks, modules, circuits, and algorithm steps described in connection with the disclosure herein may be implemented as electronic hardware, computer software, or combinations of both. To clearly illustrate this interchangeability of hardware and software, various exemplary components, blocks, modules, circuits, and steps have been described above generally in terms of their functionality. Whether such functionality is implemented as hardware or software depends upon the particular application and design constraints imposed on the overall system. A person of ordinary skill in the art may implement the described functionality in varying ways for each particular application, but such implementation decisions should not be interpreted as causing a departure from the scope of the present disclosure.

In a hardware implementation, the processing units used to perform the techniques may be implemented within one or more ASICs, DSPs, digital signal processing devices (DSPDs), programmable logic devices (PLDs), field programmable gate arrays (FPGAs), processors, controllers, microcontrollers, microprocessors, electronic devices, other electronic units designed to perform the functions described in the present disclosure, a computer, or a combination thereof.

Accordingly, the various exemplary logical blocks, modules, and circuits described in connection with the present disclosure may be implemented or performed with a general-purpose processor, a DSP, an ASIC, an FPGA or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

In a firmware and/or software implementation, the techniques may be implemented as instructions stored on a computer-readable medium, such as random access memory (RAM), read-only memory (ROM), non-volatile random access memory (NVRAM), programmable read-only memory (PROM), erasable programmable read-only memory (EPROM), electrically erasable PROM (EEPROM), flash memory, a compact disc (CD), a magnetic or optical data storage device, and the like. The instructions may be executable by one or more processors and may cause the processor(s) to perform certain aspects of the functionality described in the present disclosure.

When implemented in software, the above-described techniques may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium.

For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes a CD, laser disc, optical disc, digital versatile disc (DVD), floppy disk, and Blu-ray disc where disks usually reproduce data magnetically, while discs reproduce data optically with lasers. Combinations of the above should also be included within the scope of computer-readable media.

A software module may reside in RAM memory, flash memory, ROM memory, EPROM memory, EEPROM memory, registers, a hard disk, a removable disk, a CD-ROM, or any other form of storage medium known in the art. An exemplary storage medium may be coupled to a processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

Although the embodiments described above have been described as utilizing aspects of the presently disclosed subject matter in one or more standalone computer systems, the present disclosure is not limited thereto and may be implemented in conjunction with any computing environment, such as a network or a distributed computing environment. Furthermore, aspects of the subject matter in the present disclosure may be implemented in a plurality of processing chips or devices, and storage may be similarly affected across a plurality of devices. Such devices may include PCs, network servers, and portable devices.

Although the present disclosure has been described in connection with some embodiments in this specification, it is to be understood that various modifications and changes can be made without departing from the scope of the present disclosure, which can be understood by a person of ordinary skill in the art to which the invention of the present disclosure pertains. In addition, such modifications and changes should be considered to fall within the scope of the appended claims.

## Claims

1. A content generation method performed by at least one processor, the method comprising:
acquiring at least one first content (120); and
generating, using a machine learning model (110), at least one second content (130) associated with the at least one first content (120),
wherein the machine learning model (110) comprises:
an encoder (112) configured to generate at least one feature vector (114) based on the at least one first content (120); and
a decoder (116) configured to generate the at least one second content (130) based on the generated at least one feature vector (114).

2. The content generation method as claimed in claim 1,
wherein the at least one first content (120) comprises at least one of a first image, an outline image associated with the first image, a segmentation map associated with the first image, a depth map associated with the first image, bounding box information of an object included in the first image, facial landmark information of a person included in the first image, pose information of the person included in the first image, or a prompt associated with the first image,
the at least one second content (130) comprises at least one of the first image, an IR image associated with the first image, a second image associated with the first image and having a different domain style in at least a partial region, an outline image associated with the first image, a segmentation map associated with the first image, a depth map associated with the first image, bounding box information of the object included in the first image, facial landmark information of the person included in the first image, pose information of the person included in the first image, tabular data including physical property information of the object included in the first image, a text sequence including physical property information of the object included in the first image, or a data set representing coordinate information of the object included in the first image, and
the at least one first content (120) and the at least one second content (130) are at least partially different data.

3. The content generation method as claimed in claim 1,
wherein the decoder (116) is configured to:
generate third data represented by a third matrix by concatenating, channel by channel, first data represented by a first matrix and second data represented by a second matrix; and
output the generated third data as the at least one second content (130).

4. The content generation method as claimed in claim 3, wherein the first matrix and the second matrix included in the third data generated by the decoder (116) are identical in dimension and shape.

5. The content generation method as claimed in claim 1,
wherein the at least one second content (130) comprises a (2-1)-th content and a (2-2)-th content different from the (2-1)-th content, and
the decoder (116) comprises:
a first decoder (116a) configured to generate the (2-1)-th content based on the generated at least one feature vector (114); and
a second decoder (116b) configured to generate the (2-2)-th content based on the generated at least one feature vector (114).

6. The content generation method as claimed in claim 5,
wherein the first decoder (116a) generates the (2-1)-th content based on the at least one feature vector (114) and an intermediate vector received from the second decoder (116b), and
the second decoder (116b) generates the (2-2)-th content based on the at least one feature vector (114) and an intermediate vector received from the first decoder (116a).

7. The content generation method as claimed in claim 5,
wherein at least one of the first decoder (116a) and the second decoder (116b) comprises:
a first layer configured to generate first information associated with the content to be generated by the at least one decoder; and
a second layer configured to mix the first information and second information received from an external source.

8. The content generation method as claimed in claim 5,
wherein the first decoder (116a) comprises:
a first layer configured to generate first information associated with the (2-1)-th content to be generated by the first decoder (116a); and
a second layer configured to mix second information received from the second decoder (116b) with the first information, and
the second decoder (116b) comprises:
a third layer configured to generate the second information associated with the (2-2)-th content to be generated by the second decoder (116b); and
a fourth layer configured to mix the first information received from the first decoder (116a) with the second information.

9. The content generation method as claimed in claim 5,
wherein the first decoder (116a) is configured to:
generate third data represented by a third matrix by concatenating, channel by channel, first data represented by a first matrix and second data represented by a second matrix; and
output the generated third data as the (2-1)-th content.

10. The content generation method as claimed in claim 9,
wherein at least one of the first decoder (116a) and the second decoder (116b) comprises:
a first layer configured to generate first information associated with the content to be generated by the at least one decoder; and
a second layer configured to mix the first information and second information received from an external source.

11. A non-transitory computer-readable recording medium storing computer-readable instructions that, when executed by at least one processor, cause the at least one processor to:
acquire at least one first content (120); and
generate, using a machine learning model (110), at least one second content (130) associated with the at least one first content (120),
wherein the machine learning model (110) comprises:
an encoder (112) configured to generate at least one feature vector (114) based on the at least one first content (120); and
a decoder (116) configured to generate the at least one second content (130) based on the generated at least one feature vector (114).

12. An electronic device (100), comprising:
a memory; and
at least one processor coupled to the memory and configured to execute computer-readable instructions stored in the memory,
wherein the at least one processor is configured to:
acquire at least one first content (120); and
generate, using a machine learning model (110), at least one second content (130) associated with the at least one first content (120),
wherein the machine learning model (110) comprises:
an encoder (112) configured to generate at least one feature vector (114) based on the at least one first content (120); and
a decoder (116) configured to generate the at least one second content (130) based on the generated at least one feature vector (114).

13. The electronic device (100) as claimed in claim 12,
wherein the at least one first content (120) comprises at least one of a first image, an outline image associated with the first image, a segmentation map associated with the first image, a depth map associated with the first image, bounding box information of an object included in the first image, facial landmark information of a person included in the first image, pose information of the person included in the first image, or a prompt associated with the first image,
the at least one second content (130) comprises at least one of the first image, an IR image associated with the first image, a second image associated with the first image and having a different domain style in at least a partial region, an outline image associated with the first image, a segmentation map associated with the first image, a depth map associated with the first image, bounding box information of the object included in the first image, facial landmark information of the person included in the first image, pose information of the person included in the first image, tabular data including physical property information of the object included in the first image, a text sequence including physical property information of the object included in the first image, or a data set representing coordinate information of the object included in the first image, and
the at least one first content (120) and the at least one second content (130) are at least partially different data.

14. The electronic device (100) as claimed in claim 12,
wherein the decoder (116) is configured to:
generate third data represented by a third matrix by concatenating, channel by channel, first data represented by a first matrix and second data represented by a second matrix; and
output the generated third data as the at least one second content (130).

15. The electronic device (100) as claimed in claim 12,
wherein the at least one second content (130) comprises a (2-1)-th content and a (2-2)-th content different from the (2-1)-th content, and
the decoder (116) comprises:
a first decoder (116a) configured to generate the (2-1)-th content based on the generated at least one feature vector (114); and
a second decoder (116b) configured to generate the (2-2)-th content based on the generated at least one feature vector (114).
